# EUROPÄISCHE PATENTSCHRIFT

(11) **EP 3 351 960 B1**
(45) Veröffentlichungstag und Bekanntmachung des Hinweises auf die Patenterteilung: **11.08.2021**
(21) Anmeldenummer: 18150544.7
(22) Anmeldetag: 08.01.2018
(51) Int. Cl.: G01S 1/68, G01S 15/88, G06K 7/10, H04W 4/029, H04W 4/70

(54) **ANORDNUNG UND VERFAHREN ZUR ORTSBESTIMMUNG EINES BEWEGBAREN OBJEKTS**
ASSEMBLY AND METHOD FOR DETERMINING THE LOCATION OF A MOVABLE OBJECT
SYSTÈME ET PROCÉDÉ DE LOCALISATION D'UN OBJET POUVANT SE DÉPLACER

(30) Priorität: 18.01.2017 DE 102017100955
(43) Veröffentlichungstag der Anmeldung: 25.07.2018
(73) Patentinhaber: UCTec Beteiligungsgesellschaft AG, 9016 St. Gallen (CH)
(72) Erfinder: Eisen, Stephan, 8832 Wollerau (CH); Dierkes, Markus, 9008 St. Gallen (CH)
(74) Vertreter: Lohmanns, Bernard

(56) Entgegenhaltungen:
- EP-A2- 1 790 993
- WO-A1-2006/094965
- DE-A1-102012 223 177
- US-A1- 2006 071 790
- US-B1- 7 057 548

## Beschreibung

Die vorliegende Erfindung betrifft eine Anordnung zur Ortsbestimmung eines bewegbaren Objekts nach Anspruch 1 sowie ein derartiges Verfahren nach Anspruch 7.

Es sind verschiedene Vorrichtungen und Anordnungen zur Ortsbestimmung eines bewegbaren Objekts, zum Beispiel eines Transportcontainers oder eines Transportbehälters, bekannt. Diese werden dazu eingesetzt, die Position des bewegbaren Objekts zu bestimmen und Bewegungen dieser Objekte zu verfolgen.

US 7 057 548 B1 offenbart beispielsweise eine Anordnung zur Ortsbestimmung eines bewegbaren Objekts, insbesondere eines fahrbaren Messwagens zur geophysikalischen Untersuchung einer Messfläche, das heißt einer Bodenfläche, mit einer Ortungseinheit, die eine Steuereinheit und einen optischen Sensor aufweist, wobei der optische Sensor dazu dient, entlang der Fahrbahn des Messwagens angebrachte Ortskennzeichen zu erfassen. Die Steuereinheit kann von dem am Messwagen angebrachten optischen Sensor über eine Funkschnittstelle räumlich getrennt angeordnet sein.

DE 10 2012 223 177 A1 beschreibt ein Erfassungssystem für eine Straßenbauvorrichtung, insbesondere für ein Straßenbaufahrzeug, mit einem drahtlosen Sensor und einer Vielzahl weiterer Sensoren. Der drahtlose Sensor ist am Straßenbaufahrzeug in einer fahrzeugfesten Halterung mit einem an dieser fest angebrachten maschinenlesbaren Medium anbringbar. Die anderen Sensoren sind jeweils in einer zum fahrzeugseitig angebrachten drahtlosen Sensor entfernten Anordnung, z. B. entlang eines zu asphaltierenden Bauabschnitts, angebracht und stellen dem fahrzeugseitig angebrachten drahtlosen Sensor Signale zur Verfügung. Diese vom fahrzeugseitig angebrachten drahtlosen Sensor empfangenen Signale dienen dazu, das Straßenbaufahrzeug beispielsweise in einer geraden Linie entlang des Bauabschnitts zu führen.

US 2006/071790 A1 zeigt eine Anordnung zur Ortsbestimmung eines bewegbaren Objekts, insbesondere eines Gabelstaplers und einer Person, bei der eine Ortungseinheit Ortsinformationen zur augenblicklichen Position des Objekts innerhalb eines Arbeitsbereichs mittels in diesem verteilt angeordneter Ortskennzeichen in Form von Infrastruktur-RFID-Tags ermittelt. Die RFID-Tags sind an mehreren im Arbeitsbereich decken- und wandseitig verteilt angeordneten Beleuchtungskörpern angebracht.

Weiterhin offenbart beispielsweise die DE 10 2008 046 286 A1 eine Ortungseinheit zur Anbringung an einem bewegbaren Objekt zur Ortung der Position des bewegbaren Objekts. Die Ortungseinheit weist eine Positionsbestimmungseinheit auf, die als GPS-Empfangseinheit ausgebildet ist und im Betrieb die räumliche Position der Ortungseinheit ermittelt und aufzeichnet. Außerdem weist die Ortungseinheit ein Funkmodul auf, mit dem die ermittelte räumliche Position in ein Funknetz, insbesondere ein Mobilfunknetz, ausgesendet werden kann. Die Positionsermittlung und die Übertragung der Position sind nur dann möglich, wenn die Ortungseinheit in Reichweite eines Mobilfunknetzes ist bzw. GPS-Signale empfangbar sind. Zur Analyse der Umgebung, in der sich das bewegbare Objekt befindet, weist die Ortungseinheit zusätzlich Schallaufnehmermittel, zum Beispiel Luftschallaufnehmer wie Mikrofone oder Körperschallaufnehmer wie Vibrationssensoren, zum Erfassen von Geräuschsignalen der Umgebung der Ortungseinheit auf.

Aus der DE 10 2005 001 118 A1 ist weiterhin ein Verfahren zur Sicherung und Überwachung von Behältern zur Aufnahme von Gütern bekannt. Der Behälter weist Sensormittel zur Feststellung von Zustandsveränderungen der physikalischen Beschaffenheit des Behältermaterials auf sowie ein Ortungsmittel zur Bestimmung der Position des Behälters, wobei die Position des Behälters den von dem Sensormittel erhaltenen Zustandsinformationen zugeordnet wird. Das Ortungsmittel kann in Form eines GSM-Moduls, eines GPS-Moduls oder eines Peilsenders ausgebildet sein. Des Weiteren werden die vom Sensormittel erhaltenen Zustandsinformationen einem Kommunikationsmodul am Behälter, das bevorzugt ein GSM-Modul ist, übermittelt, das wiederum die Zustandsinformationen an ein Nachrichtenempfangsgerät übermittelt. Der Behälter kann weiterhin einen Temperatur und/oder Feuchtigkeitssensor aufweisen.

Ferner beschreibt die DE 20 2011 105 052 U1 einen Transportbehälter für Lebensmittel, der wenigstens einen Sensor zum Erfassen einer sich auf den Zustand der transportierten Waren auswirkenden Einflussgröße, wie zum Beispiel Temperatur, Feuchtigkeit, Druck, Helligkeit oder Beschleunigung, aufweist, ferner einen mit dem Sensor gekoppelten Transponder, der ein RFID-Transponder ist, zur berührungslosen Übertragung von Daten, so dass die von dem Sensor erfasste Einflussgröße über den Transponder abrufbar ist, sowie ein Display zur Anzeige der vom Sensor erfassten Einflussgröße. Vom Transponder soll weiterhin ein Lokalisationssignal zur aktuellen Positionsbestimmung des Behälters aussendbar sein.

Die EP 2 141 508 B1 offenbart weiterhin eine Ortungsanordnung sowie ein Verfahren zur Ortsbestimmung mittels Ultraschall insbesondere von Losboxen, an denen eine Kennzeicheneinheit angebracht ist. Die Kennzeicheneinheit weist einen Ultraschallempfänger, einen Strahlungssender, einen Strahlungsempfänger und eine Steuereinheit auf, die abhängig von einem mit dem Strahlungsempfänger empfangenen Synchronisationssignal eine Ultraschalllaufzeitmessung durchführt und das Ergebnis mit Hilfe des Strahlungssenders sendet. Die Kennzeicheneinheit kann darüber hinaus eine bistabile Zeichen-Anzeigeeinheit aufweisen.

Auf GPS basierende Positionsbestimmungseinheiten, die auf den Empfang von GPS-Signalen angewiesen sind, eignen sich nicht zur Ortsbestimmung von bewegbaren Objekten innerhalb von Gebäuden, zum Beispiel in Produktionshallen, da in diesen gewöhnlich kein GPS-Signal empfangen werden kann. Zudem liegt die erreichbare Ortsauflösung einer GPS-Ortung im Meter-Bereich und ist damit nicht zur zielgenauen Steuerung oder Führung beispielsweise von mobilen Robotern zur autonomen Aufnahme des bewegbaren Objekts, zum Beispiel eines Transportbehälters oder eines Fertigungsloses, das mehrere auf gleiche Art zu bearbeitende Werkstücke wie zum Beispiel Halbleiterwafer enthalten kann, geeignet.

Andererseits erfordert eine zum Beispiel auf Ultraschall basierende Ortsbestimmung, wie sie in der EP 2 141 508 B1 vorgeschlagen wird, einen nicht unerheblichen Infrastrukturaufwand, der unter anderem in der Bereitstellung und Ausstattung einer Fertigungsumgebung, zum Beispiel einer Produktionshalle, mit einer Vielzahl von Ultraschallsendern begründet ist.

Vor diesem Hintergrund liegt der vorliegenden Erfindung die Aufgabe zugrunde, eine Anordnung und ein Verfahren zur Ortsbestimmung von bewegbaren Objekten bereitzustellen, die eine langzeitstabile Ortsbestimmung des bewegbaren Objekts mit sehr hoher Genauigkeit, insbesondere im cm-Bereich, ermöglichen und zudem einen verhältnismäßig geringen Infrastrukturaufwand erfordern.

Diese Aufgabe wird durch eine Anordnung mit den Merkmalen des Anspruchs 1 sowie durch ein Verfahren mit den Merkmalen des Anspruchs 7 gelöst. Weitere, besonders vorteilhafte Ausgestaltungen der Erfindung offenbaren die jeweiligen Unteransprüche.

Erfindungsgemäß weist eine Anordnung zur Ortsbestimmung eines bewegbaren Objekts an einem Abstellort eine an dem bewegbaren Objekt anbringbare Ortungseinheit auf. Die Ortungseinheit weist wiederum wenigstens eine Steuereinheit, insbesondere eine elektronische Steuereinheit, ein Ortsbestimmungsmittel und ein Funkübertragungsmittel auf, wobei die Steuereinheit ausgebildet ist, eine von dem Ortsbestimmungsmittel ermittelte Ortsinformation zu empfangen und die Ortsinformation drahtlos mittels des Funkübertragungsmittels an einen Empfänger zu übertragen. Gemäß der Erfindung ist es vorgesehen, dass die Ortsinformation in einem Ortskennzeichen gespeichert ist, das an dem Abstellort angebracht ist, wobei das Ortsbestimmungsmittel ausgebildet ist, die Ortsinformation aus dem Ortskennzeichen zu erfassen.

Mit anderen Worten sind bei der erfindungsgemäßen Anordnung Ortskennzeichen an vorherbestimmten, definierten Abstellorten, wie sie beispielsweise in einer Fertigungsumgebung, insbesondere innerhalb von Gebäuden, festgelegbar sind, einmalig angebracht, wobei die Ortskennzeichen den jeweiligen Abstellort eindeutig kennzeichnen und die mittels des Ortsbestimmungsmittels aus dem Ortskennzeichen erfasste Ortsinformation eine eindeutige Identifizierung des Abstellorts, an dem sich das bewegbare Objekt augenblicklich befindet, gewährleistet. Die Identifizierung des Abstellorts kann zum Beispiel direkt in der am bewegbaren Objekt angebrachten Ortungseinheit erfolgen. Die Identifizierung des Abstellorts kann aber auch durch eine mit dem Empfänger verbundene, übergeordnete Datenverarbeitungseinheit, die zum Beispiel Teil eines Lager- oder Fertigungslogistiksystems sein kann, durchgeführt werden. Da die genaue Lage der vorherbestimmten, definierten, mit Ortskennzeichen versehenen Abstellorte im Voraus bekannt ist, lässt sich die Ortsbestimmung des bewegbaren Objekts auf diese Weise mit sehr hoher Genauigkeit durchführen. Insbesondere lässt sich eine Genauigkeit der Ortsbestimmung im niedrigen cm-Bereich, zum Beispiel unterhalb von etwa +/- 2 cm, sicherstellen, so dass zum Beispiel eine zielgenaue Steuerung und Führung mobiler Roboter zu dem abgestellten, bewegbaren Objekt sicher möglich ist. Außerdem beschränkt sich der Infrastrukturaufwand im Wesentlichen auf das vorherige, einmalige Anbringen der Ortskennzeichen an den vorherbestimmten Abstellorten, auf die Anbringung der Ortungseinheiten an den bewegbaren, zu ortenden Objekten und auf die Versorgung des Ortungsbereichs mit einem Funknetz, das eine drahtlose Kommunikation zwischen den Ortungseinheiten und dem Empfänger ermöglicht. Diese Maßnahmen stellen jedoch einen verhältnismäßig geringen, kostengünstigen und einfach zu realisierenden Aufwand dar.

Gemäß einer vorteilhaften Ausgestaltung der Erfindung ist das Ortsbestimmungsmittel ausgebildet, die Ortsinformation aus dem Ortskennzeichen berührungslos zu erfassen. Die berührungslose Erfassung erleichtert das Abstellen des bewegbaren Objekts am Abstellort, da sie eine gewisse Toleranz der Anordnung des bewegbaren Objekts zu dem am Abstellort angebrachten Ortskennzeichen ermöglicht. Das bewegbare Objekt muss demnach nicht millimetergenau am Abstellort abgestellt werden, damit das Ortsbestimmungsmittel in der Lage ist, die Ortsinformation aus dem Ortskennzeichen zu erfassen.

Das Ortsbestimmungsmittel ist gemäß der Erfindung dazu ausgebildet, die Ortsinformation aus dem Ortskennzeichen auf optischem Weg zu erfassen. Eine Erfassung auf elektromagnetischem Weg ist denkbar, jedoch nicht Bestandteil der Erfindung.

Erfindungsgemäß ist das Ortsbestimmungsmittel eine Kamera.

So kann das Ortskennzeichen gemäß einer weiteren vorteilhaften Ausgestaltung der Erfindung beispielsweise ein Strichcode, wie zum Beispiel ein Barcode, oder ein 2D-Code, beispielsweise ein Matrix- (z. B. QR-Code) oder Punktcode, sein. Das Ortsbestimmungsmittel als Kamera erfasst die in dem Ortskennzeichen gespeicherte bzw. codierte Ortsinformation auf optischem Wege berührungslos. Auf diese Weise lässt sich das Ortskennzeichen auf einfachste Weise ohne großen Aufwand an den vorherbestimmten Abstellorten anbringen. Auch sind entsprechend zur optischen Erfassung von Strichcodes oder 2D-Codes geeignete Kameravorrichtungen und/oder Barcode-Leseeinrichtungen heutzutage preiswert zu erhalten, so dass sich die Ortungseinheit ebenfalls kostengünstig herstellen lässt.

Mit dem Ortsbestimmungsmittel als Kamera lässt sich aus der optischen Verarbeitungslogik, insbesondere zum Beispiel über den eingestellten, zur Erfassung des Ortskennzeichens erforderlichen Fokus und/oder die Position und/oder Lage des Ortskennzeichens im erfassten Kamerabild, in vorteilhafter Weise die genaue, relative Position der Ortungseinheit zum Ortskennzeichen bestimmen bzw. berechnen, wodurch die Genauigkeit der Positionsbestimmung noch weiter erhöht werden kann. Für diesen Fall kann die Steuereinheit dazu ausgebildet sein, diese zusätzlichen Informationen aus dem von dem Ortsbestimmungsmittel bzw. der Kamera erfassten und an die Steuereinheit übermittelten Kamerabild zu gewinnen bzw. zu berechnen.

Unabhängig von der Erfindung könnte das Ortskennzeichen auch ein RFID-Transponder sein, in welchem Fall das Ortsbestimmungsmittel ein RFID-Lesegerät wäre. Als RFID-Transponder können passive RFID-Transponder gewählt werden, da diese in großen Stückzahlen preiswert zur Verfügung stehen und sich hierdurch die Kosten zur Realisierung einer solchen Anordnung zur Ortsbestimmung des bewegbaren Objekts niedrig halten lassen. Mittels des RFID-Lesegeräts lässt sich die in dem RFID-Transponder gespeicherte Ortsinformation auf elektromagnetischem Weg berührungslos erfassen.

Erfindungsgemäß wird die an dem bewegbaren Objekt anbringbare Ortungseinheit elektrisch von einer Batterie oder einem Akkumulator mit Energie versorgt. Hierbei ist eine lange Batterielebensdauer von entscheidender Bedeutung für einen langzeitstabilen Betrieb der Ortsbestimmungsanordnung. Um eine lange Batterielebensdauer gewährleisten zu können, ist es daher vorgesehen, dass die Ortungseinheit immer dann in einen energiesparenden Ruhemodus versetzt wird, in dem zum Beispiel das Ortsbestimmungsmittel und/oder das Funkübertragungsmittel und/oder die Steuereinheit abgeschaltet sein kann/können, wenn keine Ortsbestimmung vorgenommen werden muss, weil sich zum Beispiel die Position des bewegbaren Objekts nicht geändert hat.

Dementsprechend weist die Ortungseinheit gemäß der Erfindung mit der Steuereinheit verbundene Sensormittel auf, die ausgebildet sind, eine Bewegung der Ortungseinheit und damit des bewegbaren Objekts zu erfassen. Hierzu können beispielsweise Beschleunigungssensoren vorgesehen sein, die ein Wegnehmen von oder ein Abstellen des bewegbaren Objekts und der damit verbundenen Ortungseinheit an einem Abstellort erfassen können, so dass die Ortungseinheit nur in diesen Fällen den energiesparenden Ruhemodus verlässt und aktiviert wird, um das am Abstellort angebrachte Ortskennzeichen bzw. die darin gespeicherte Ortsinformation zu erfassen. Nach der Erfassung und Übertragung der Ortsinformation an den Empfänger kann die Ortungseinheit erneut in den energiesparenden Ruhemodus wechseln.

Zur noch weiteren Verbesserung der Batterielebensdauer sowie auch zur Verkürzung der Erfassungszeit, die das Ortsbestimmungsmittel benötigt, um die Ortsinformation aus dem Ortskennzeichen zu erfassen, und damit der die Wesentliche Energie verbrauchenden aktiven Betriebszeit der Ortungseinheit, kann es für die Ortungseinheit vorteilhaft sein, wenn ihr weitere Informationen über den augenblicklichen Abstellort zur Verfügung stehen.

So kann die Ortungseinheit nach einer noch weiteren vorteilhaften Ausgestaltung der Erfindung mit der Steuereinheit verbundene Sensormittel aufweisen, die ausgebildet sind, eine Lage der Ortungseinheit und damit des bewegbaren Objekts zu erfassen. Hierzu können an sich bekannte Lage- oder Neigungssensoren vorgesehen sein, die eine Erfassung der Lage bzw. Neigung der Ortungseinheit bzw. des bewegbaren Objekts im dreidimensionalen Raum ermöglichen.

Des Weiteren kann die Ortungseinheit nach einer noch weiteren vorteilhaften Ausgestaltung der Erfindung mit der Steuereinheit verbundene Sensormittel aufweisen, die ausgebildet sind, einen Abstand und/oder eine relative Lage zu die Ortungseinheit und damit das bewegbare Objekt umgebenden weiteren Objekten zu erfassen. Als Abstandssensoren können beispielsweise Ultraschallsensoren verwendet werden.

Auch können noch weitere Sensoren, wie zum Beispiel Helligkeitssensoren, Farbsensoren, Schallaufnehmer und dergleichen, die eine Erfassung von Umgebungseigenschaften der Ortungseinheit erlauben, in der Ortungseinheit enthalten und von dieser verwendet werden.

In besonders bevorzugter Ausgestaltung kann die Steuereinheit ausgebildet sein, mittels der durch das Ortsbestimmungsmittel und/oder durch die Sensormittel erfassten Informationen den Abstellort genauer zu klassifizieren. Beispielsweise kann die Steuer- bzw. Ortungseinheit auf diese Weise erkennen, ob sich das bewegbare Objekt in einem Regal, auf einem Tisch, auf einem Transportwagen oder in den Händen einer Person befindet. Aus diesen Informationen lässt sich insbesondere die Erfassung des Ortskennzeichens durch das Ortsbestimmungsmittel erleichtern und insbesondere beschleunigen, indem zum Beispiel der Fokus und/oder die Lichtempfindlichkeit einer optischen Kamera gezielt auf einen räumlichen Bereich der Umgebung der Ortungseinheit eingestellt wird, in dem das Ortskennzeichen abhängig von der Art des Abstellorts zu erwarten ist. In dem Fall, in dem die Ortungseinheit bzw. das bewegbare Objekt beispielsweise von einer Person getragen wird, kann während des Transports durch die Person auf den Versuch einer Ortung gänzlich verzichtet werden. Bei einem als RFID-Lesegerät ausgebildeten Ortsbestimmungsmittel kann zum Beispiel dessen Sendeleistung abhängig von dem erkannten Abstellort variiert werden.

Die Klassifizierung des Abstellorts lässt sich insbesondere noch dadurch verbessern, dass die erfassten Umgebungsinformationen unterschiedlicher Sensormittel miteinander kombiniert werden. So kann die von einem Bewegungs- bzw. Beschleunigungssensor alleine bereitgestellte Information zum Beispiel unzureichend sein, wenn das bewegbare Objekt und damit die hieran angebrachte Ortungseinheit in einem Regal abgestellt wird, das bei einer Platzierung anderer Objekte in das Regal unter Umständen in eine gewisse Bewegung versetzt wird. In Kombination mit den durch einen Lagesensor und/oder einen Abstandssensor und/oder einen Helligkeitssensor erfassten Informationen kann die durch den Bewegungssensor festgestellte Bewegung insofern plausibilisiert werden, ob tatsächlich eine Entnahme des bewegbaren Objekts aus dem Regal stattgefunden hat oder nicht. Nur in dem Fall einer tatsächlichen Entnahme bzw. Ablage des bewegbaren Objekts sollte die Ortungseinheit den Versuch einer Ortsbestimmung mittels des Ortsbestimmungsmittels unternehmen, wodurch ein besonders energieeffizienter Betrieb der Ortungseinheit gewährleistet werden kann.

Die Art der Klassifizierung aller möglichen, in einer Einsatzumgebung der Ortungseinheit bzw. des bewegbaren Objekts vorkommenden Abstellorte kann an die spezielle Einsatzumgebung entsprechend angepasst und hinsichtlich dieser optimiert werden, um die Qualität der Klassifizierung zu erhöhen.

Zur Anzeige von bestimmten, die Ortungseinheit und/oder das bewegbare Objekt betreffenden Statusinformationen kann die Ortungseinheit weiterhin mit einer optischen Anzeigeeinrichtung versehen sein, die zum Beispiel aus einer oder mehreren Status-LEDs bestehen kann oder auch ein elektronisches Display umfassen kann, das aufgrund des geringen Energieverbrauchs besonders bevorzugt als bistabiles Display ausgeführt sein kann, das den darzustellenden Inhalt auch nach einem Abschalten der Betriebsspannung anzeigt.

Mehrere Ortungseinheiten innerhalb der Anordnung zur Ortsbestimmung eines bewegbaren Objekts lassen sich voneinander zum Beispiel durch ein in ihnen gespeichertes, eindeutiges Identifizierungskennzeichen unterscheiden, dem die durch das Ortsbestimmungsmittel erfasste Ortsinformation zugeordnet wird. So kann der Empfänger bzw. eine mit diesem verbundene, übergeordnete Datenverarbeitungseinheit, die zum Beispiel Teil eines Lager- oder Fertigungslogistiksystems sein kann, stets exakt die aktuelle Position einer bestimmten Ortungseinheit bzw. des mit dieser ausgestatteten bewegbaren Objekts nachverfolgen.

Vorzugsweise handelt es sich bei dem bewegbaren Objekt um einen Transportbehälter in einer Fertigungsumgebung, wobei der Transportbehälter zum Beispiel mehrere, auf gleiche Art zu bearbeitende Werkstücke enthält. Die Erfindung ist jedoch nicht auf die Verwendung von Transportbehältern als bewegbare Objekte beschränkt. Sie kann selbstverständlich auf jede andere Art bewegbarer Objekte, an denen die hierin beschriebene Ortungseinheit anbringbar ist, angewendet werden, die an vorherbestimmbaren, mit einem Ortskennzeichen versehbaren Abstellorten abgelegt werden können.

Als Funknetz zur Übertragung der von der Ortungseinheit gewonnenen Ortsinformationen an den Empfänger eignet sich insbesondere ein WLAN-Funknetz, dessen Infrastruktur sich ohne großen Aufwand besonders kostengünstig bereitstellen lässt. Andere Funknetze sind selbstverständlich ebenso denkbar.

Gemäß einem weiteren Aspekt der Erfindung wird ein Verfahren zur Ortsbestimmung eines bewegbaren Objekts an einem Abstellort mittels einer an dem bewegbaren Objekt anbringbaren Ortungseinheit bereitgestellt. Die Ortungseinheit weist hierbei eine Steuereinheit, ein Ortsbestimmungsmittel und ein Funkübertragungsmittel auf, wobei mittels des Ortsbestimmungsmittels eine Ortsinformation ermittelt wird, diese Ortsinformation an die Steuereinheit übermittelt wird und die Ortsinformation drahtlos mittels des Funkübertragungsmittels an einen Empfänger übertragen wird. Erfindungsgemäß wird ein die Ortsinformation speicherndes Ortskennzeichen an dem Abstellort angebracht und die Ortsinformation mittels des Ortsbestimmungsmittels aus dem Ortskennzeichen erfasst. Die Vorteile und Wirkungen eines solchen Verfahrens wurden bereits im Zusammenhang mit der vorstehend beschriebenen Ortsbestimmungsanordnung dargelegt, die sinngemäß auch auf das erfindungsgemäße Ortsbestimmungsverfahren Anwendung finden. Insbesondere lassen sich alle hierin beschriebenen Merkmale der Ortsbestimmungsanordnung in sinngemäßer Weise auf das Ortsbestimmungsverfahren übertragen und stellen somit weitere Ausführungsformen des Verfahrens dar. Auf eine Wiederholung dieser Ausführungen wird an dieser Stelle verzichtet. Dennoch sei erwähnt, dass die Ortungseinheit, wie hierin bereits an anderer Stelle offenbart wurde, elektrisch von einer Batterie versorgt wird und eine Bewegung der Ortungseinheit mittels mit der Steuereinheit der Ortungseinheit verbundenen Sensormitteln erfasst wird, wobei das Ortsbestimmungsmittel eine Kamera ist und die Ortungseinheit in einen energiesparenden Ruhemodus versetzt wird, in dem wenigstens das Ortsbestimmungsmittel abgeschaltet wird, und die Ortungseinheit aus dem Ruhemodus nur aktiviert wird, um die Ortsinformation mit dem Ortsbestimmungsmittel aus dem am jeweiligen Abstellort angebrachten Ortskennzeichen zu erfassen, wenn eine Bewegung der Ortungseinheit durch die Sensormittel erfasst wird.

Weitere Merkmale und Vorteile der Erfindung ergeben sich aus der folgenden Beschreibung eines nicht einschränkend zu verstehenden Ausführungsbeispiels der Erfindung, die im Folgenden unter Bezugnahme auf die Zeichnung näher erläutert wird. In dieser Zeichnung zeigen schematisch:
- Fig. 1: eine perspektivische Ansicht eines Ausführungsbeispiels einer Anordnung zur Ortsbestimmung eines bewegbaren Objekts gemäß der Erfindung,
- Fig. 2: ein Ausführungsbeispiel einer an dem in Fig. 1 gezeigten bewegbaren Objekt anbringbaren Ortungseinheit und
- Fig. 3A-3C: Beispiele einer Klassifizierung unterschiedlicher Abstellorte.

In den unterschiedlichen Figuren sind hinsichtlich ihrer Funktion gleichwertige Teile stets mit denselben Bezugszeichen versehen, so dass diese in der Regel auch nur einmal beschrieben werden.

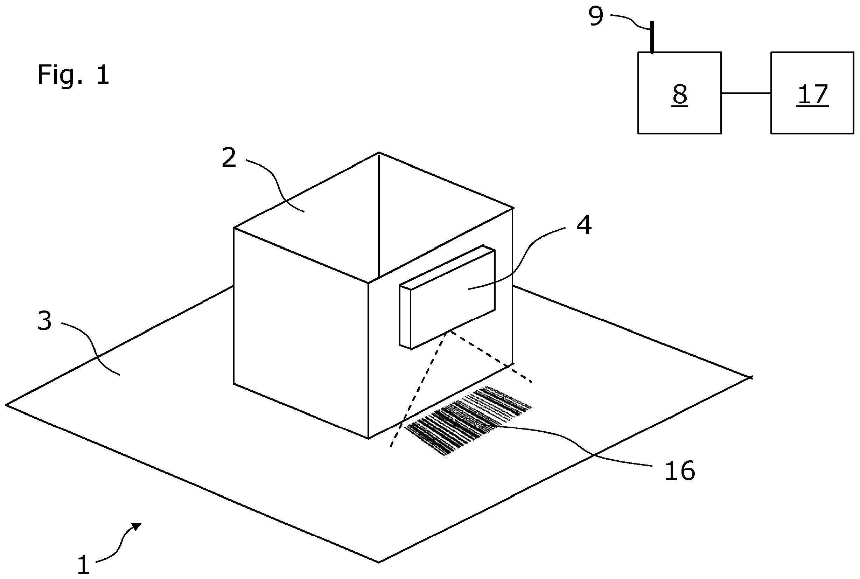

Fig. 1 stellt eine perspektivische Ansicht eines Ausführungsbeispiels einer Anordnung 1 zur Ortsbestimmung eines bewegbaren Objekts 2 gemäß der Erfindung dar. Das bewegbare Objekt 2 ist in dem in Fig. 1 dargestellten Ausführungsbeispiel ein Transportbehälter zur Aufnahme von Gegenständen (nicht dargestellt), zum Beispiel auf gleiche Art zu bearbeitende Werkstücke. Wie zu erkennen ist, ist das bewegbare Objekt 2 an einem Abstellort 3 abgestellt, der zum Beispiel ein Tisch sein kann. An dem bewegbaren Objekt 2 ist eine Ortungseinheit 4 angebracht.

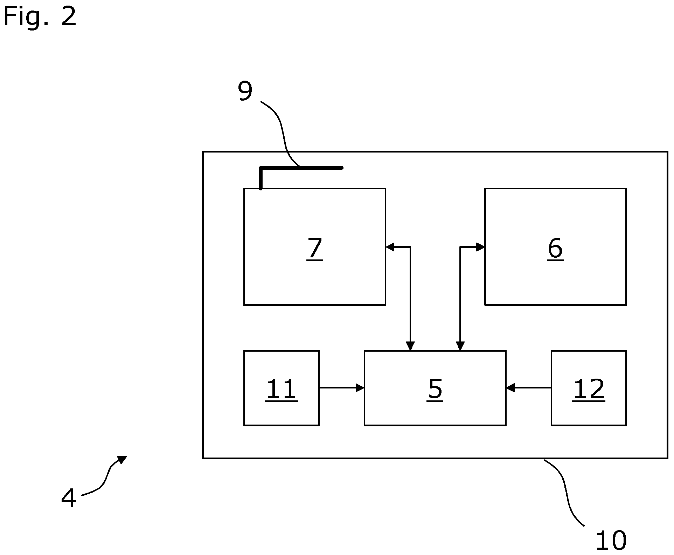

Zur Erläuterung des Aufbaus der Ortungseinheit 4 wird nun auf Fig. 2 verwiesen, in der schematisch ein Ausführungsbeispiel der an dem in Fig. 1 gezeigten bewegbaren Objekt 2 anbringbaren Ortungseinheit 4 dargestellt ist. Die in Fig. 2 dargestellte beispielhafte Ortungseinheit 4 weist im Wesentlichen eine Steuereinheit 5, ein Ortsbestimmungsmittel 6 und ein Funkübertragungsmittel 7 auf. Das Ortsbestimmungsmittel 6 ist bei der dargestellten Ortungseinheit 4 als optische Kamera ausgebildet. Die Steuereinheit 5 ist dazu ausgebildet, eine von dem Ortsbestimmungsmittel 6 ermittelte Ortsinformation zu empfangen und diese Ortsinformation drahtlos mittels des Funkübertragungsmittels 7 an einen Empfänger 8 zu übertragen, der in Fig. 1 dargestellt ist. Das Funkübertragungsmittel 7 ist hierzu mit einer Antenne 9 versehen, die bei dem gezeigten Ausführungsbeispiel der Ortungseinheit 4 innerhalb eines Gehäuses 10 der Ortungseinheit 4 aufgenommen ist.

Die Steuereinheit 5 ist neben dem Empfang der von dem Ortsbestimmungsmittel 6 erfassten Ortsinformationen ferner dazu eingerichtet, Betriebsparameter des Ortsbestimmungsmittels 6, wie zum Beispiel den Fokus und/oder die Lichtempfindlichkeit der Kamera, einzustellen, was durch den zwischen der Steuereinheit 5 und dem Ortsbestimmungsmittel 6 dargestellten Doppelpfeil angedeutet ist.

Bei der in Fig. 2 dargestellten Ortungseinheit 4 ist die Steuereinheit 5 sowohl zum Senden der Ortungsinformationen mittels des Funkübertragungsmittels 7 an den Empfänger 8 eingerichtet, sie kann bei dem dargestellten Ausführungsbeispiel aber zusätzlich auch Daten über das Funkübertragungsmittel 7 empfangen, wie durch den entsprechenden Doppelpfeil angedeutet ist.

Dies kann zum Beispiel dann von Vorteil sein, wenn die Ortungseinheit 4 zusätzlich auch mit einer optischen Anzeigeeinrichtung versehen ist (nicht dargestellt), die zum Beispiel aus einer oder mehreren Status-LEDs oder einem bevorzugt bistabilen Display zur Anzeige von Informationen bestehen kann. In diesem Fall kann das Funkübertragungsmittel 7 beispielsweise Statusinformationen von einer übergeordneten Datenverarbeitungseinheit 17 (Fig. 1) empfangen, die von der Steuereinheit 5 auf der Anzeigeeinrichtung zur Anzeige gebracht werden können, um beispielsweise eine Person in der Umgebung der Ortungseinheit 4 auf diese Informationen aufmerksam zu machen. Selbstverständlich kann die Ortungseinheit 4 bzw. Steuereinheit 5 auch eigenständig generierte Statusinformationen auf einer solchen Anzeigeeinrichtung anzeigen.

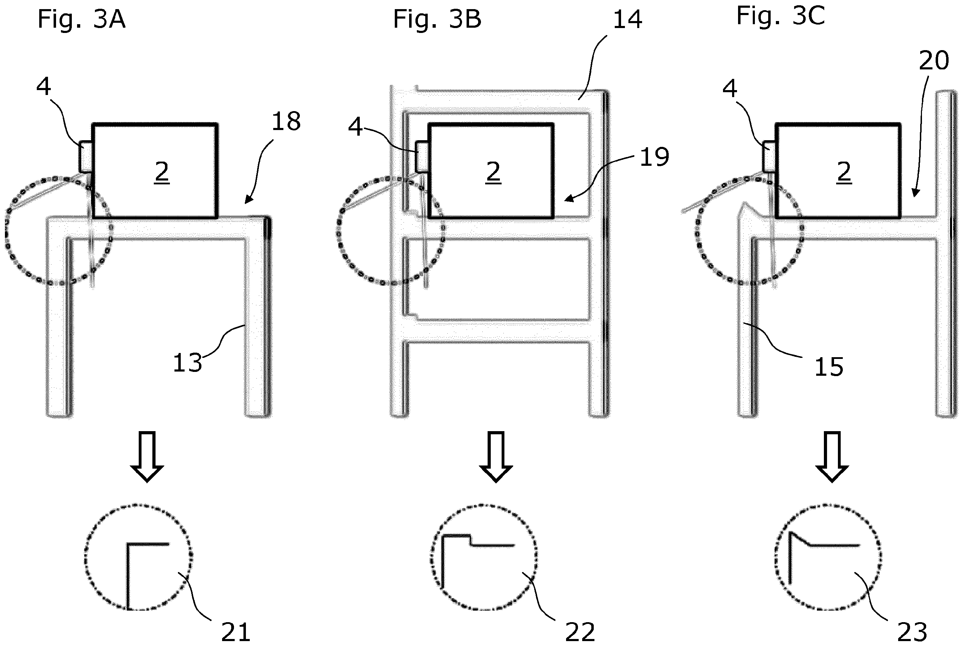

Fig. 2 ist weiterhin zu entnehmen, dass die Ortungseinheit 4 bei dem dargestellten Ausführungsbeispiel ferner erste und zweite Sensormittel 11 und 12 aufweist, die jeweils mit der Steuereinheit 5 verbunden sind. Die Sensormittel 11 sind beispielhaft ausgebildet, eine Bewegung der Ortungseinheit 4 zu erfassen, und die Sensormittel 12 sind beispielhaft ausgebildet, einen Abstand und/oder eine relative Lage zu die Ortungseinheit 4 umgebenden weiteren Objekten 13, 14, 15 zu erfassen, die in den Fig. 3A bis 3C dargestellt sind. Es ist zu verstehen, dass die Anzahl und die Art der Sensormittel, mit denen die Ortungseinheit 4 ausgestattet ist, nicht auf die in Fig. 2 dargestellten Sensormittel 11 und 12 beschränkt sind, sondern je nach Anwendung und Verwendung der Ortungseinheit 4 gezielt ausgewählt werden können.

In Fig. 1 ist wiederum zu erkennen, dass ein Ortskennzeichen 16 an dem Abstellort 3 angebracht ist. Dieses Ortskennzeichen 16, das in dem vorliegenden Fall als Strichcode ausgeführt ist, speichert bzw. codiert die Ortsinformation, die von dem in der Ortungseinheit 4 enthaltenen Ortsbestimmungsmittel 6 (Fig. 2) erfasst wird. Da das Ortsbestimmungsmittel 6 in dem dargestellten Ausführungsbeispiel als optische Kamera ausgebildet ist und das Ortskennzeichen 16 als Strichcode ausgebildet ist, erfasst das Ortsbestimmungsmittel 6 das Ortskennzeichen 16 berührungslos auf optischem Wege, wie in Fig. 1 durch die von der Ortungseinheit 4 ausgehenden gestrichelten Linien angedeutet ist.

Fig. 1 ist weiterhin zu entnehmen, dass mit dem Empfänger 8 eine übergeordnete Datenverarbeitungseinheit 17, die zum Beispiel Teil eines nicht weiter dargestellten Lager- oder Fertigungslogistiksystems sein kann, verbunden ist. Diese wertet die von der Ortungseinheit 4 übermittelten Ortsinformationen aus und ist somit in der Lage, die exakte Position der Ortungseinheit 4 und somit des bewegbaren Objekts 2 nachzuverfolgen. Zur eindeutigen Identifizierung jeder einzelnen einer Vielzahl von Ortungseinheiten 4 in einer gesamten Ortsbestimmungsanordnung 1 übermittelt die Ortungseinheit 4 neben der von dem Ortskennzeichen 16 erfassten, reinen Ortsinformation ebenfalls ein für jede Ortungseinheit 4 eindeutiges Identifizierungskennzeichen.

Die in Fig. 2 dargestellte Steuereinheit 5 der Ortungseinheit 4 ist ferner ausgebildet, mittels der durch das Ortsbestimmungsmittel 6 und/oder der durch die Sensormittel 11 und 12 erfassten Informationen den jeweiligen Abstellort zu klassifizieren.

Fig. 3A bis 3C stellen Beispiele einer Klassifizierung unterschiedlicher Abstellorte 18, 19 und 20 dar. Mit Hilfe des Ortsbestimmungsmittels 6 und/oder der Sensormittel 11 und 12 erfasst die Ortungseinheit 4 des jeweiligen bewegbaren Objekts 2 die in der näheren Umgebung der Ortungseinheit 4 befindlichen Objekte 13, 14 bzw. 15, die hier beispielhaft als ebener Tisch 13, als Regal 14 und als nicht ebener Bearbeitungs- bzw. Entnahmetisch 15 für die in dem Transportbehälter 2 enthaltenen Werkstücke (nicht dargestellt) dargestellt sind. Anhand der Kontur der jeweiligen Objekte 13, 14 und 15 in der näheren Umgebung der Ortungseinheit 4, die mit dem Ortsbestimmungsmittel 6 bzw. der Kamera und/oder den Sensormitteln 11 und 12 erfassbar ist, lässt sich eine eindeutige Klassifizierung des jeweiligen Abstellorts 18, 19 bzw. 20 durchführen, wie durch die in der unteren Bildhälfte der jeweiligen Fig. 3A bis 3C dargestellten Klassifizierungsprofile 21, 22 und 23 veranschaulicht ist. Anhand der durch die Steuereinheit 5 der jeweiligen Ortungseinheit 4 gewonnenen Klassifizierungsinformationen des jeweiligen Abstellorts 18, 19 bzw. 20 lässt sich der Betrieb der Ortungseinheit 4 noch energieeffizienter und stabiler gestalten, wie hierin bereits erläutert wurde.

Die vorstehend beschriebene erfindungsgemäße Anordnung und das Verfahren zur Ortsbestimmung eines bewegbaren Objekts sind nicht auf die hierin offenbarte Ausführungsform beschränkt, sondern umfassen auch gleich wirkende weitere Ausführungsformen.

In bevorzugter Ausführung werden die erfindungsgemäße Anordnung sowie das erfindungsgemäße Verfahren zur Ortsbestimmung eines bewegbaren Objekts, insbesondere eines Transportbehälters, in einer Fertigungsumgebung, insbesondere innerhalb von Gebäuden, verwendet.

### Bezugszeichenliste;

- 1: Anordnung zur Ortsbestimmung eines bewegbaren Objekts
- 2: Bewegbares Objekt, Transportbehälter
- 3: Abstellort
- 4: Ortungseinheit
- 5: Steuereinheit
- 6: Ortsbestimmungsmittel, Kamera
- 7: Funkübertragungsmittel
- 8: Empfänger
- 9: Antenne
- 10: Gehäuse
- 11: Sensormittel
- 12: Sensormittel
- 13: Tisch
- 14: Regal
- 15: Bearbeitungs-/Entnahmetisch
- 16: Ortskennzeichen
- 17: Datenverarbeitungseinheit
- 18: Erster Abstellorts
- 19: Zweiter Abstellort
- 20: Dritter Abstellort
- 21: Erstes Klassifizierungsprofil
- 22: Zweites Klassifizierungsprofil
- 23: Drittes Klassifizierungsprofil

## Patentansprüche

1. Anordnung zur Ortsbestimmung eines bewegbaren Objekts (2) an einem von mehreren vorherbestimmbaren Abstellorten (3, 18, 19, 20)), an denen das bewegbare Objekt (2) abstellbar ist, aufweisend eine an dem bewegbaren Objekt (2) anbringbare Ortungseinheit (4), die eine Steuereinheit (5), ein Ortsbestimmungsmittel (6) und ein Funkübertragungsmittel (7) aufweist, wobei die Steuereinheit (5) ausgebildet ist, eine von dem Ortsbestimmungsmittel (6) ermittelte Ortsinformation zu empfangen und die Ortsinformation drahtlos mittels des Funkübertragungsmittels (7) an einen Empfänger (8) zu übertragen, wobei das bewegbare Objekt (2) ein Transportbehälter zur Aufnahme von Gegenständen ist, wobei die Ortsinformation in einem den jeweiligen Abstellort (3, 18, 19, 20) eindeutig kennzeichnenden Ortskennzeichen (16) gespeichert ist, das an dem jeweiligen Abstellort (3, 18, 19, 20) angebracht ist, wobei das Ortsbestimmungsmittel (6) ausgebildet ist, die Ortsinformation aus dem Ortskennzeichen (16) des jeweiligen Abstellorts (3, 18, 19, 20), an dem sich das bewegbare Objekt (2) augenblicklich befindet, zu erfassen,
**dadurch gekennzeichnet, dass**
die Ortungseinheit (4) elektrisch von einer Batterie versorgt ist und die Ortungseinheit (4) mit der Steuereinheit (5) verbundene Sensormittel (11, 12) aufweist, die ausgebildet sind, eine Bewegung der Ortungseinheit (4) zu erfassen, und das Ortsbestimmungsmittel (6) eine Kamera ist, wobei die Ortungseinheit (4) in einen energiesparenden Ruhemodus versetzbar ist, in dem wenigstens das Ortsbestimmungsmittel (6) abgeschaltet ist, und die Ortungseinheit (4) den Ruhemodus nur verlässt, um die Ortsinformation mit dem Ortsbestimmungsmittel (6) aus dem am jeweiligen Abstellort (3, 18, 19, 20) angebrachten Ortskennzeichen (16) zu erfassen, wenn eine Bewegung der Ortungseinheit (4) durch die Sensormittel (11, 12) erfasst ist.

2. Anordnung nach Anspruch 1,
**dadurch gekennzeichnet, dass**
das Ortsbestimmungsmittel (6) ausgebildet ist, die Ortsinformation aus dem Ortskennzeichen (16) berührungslos zu erfassen.

3. Anordnung nach einem der vorhergehenden Ansprüche,
**dadurch gekennzeichnet, dass**
das Ortskennzeichen (16) ein Strichcode oder ein 2D-Code ist.

4. Anordnung nach einem der vorhergehenden Ansprüche,
**dadurch gekennzeichnet, dass**
die Ortungseinheit (4) mit der Steuereinheit (5) verbundene Sensormittel (11, 12) aufweist, die ausgebildet sind, eine Lage der Ortungseinheit (4) zu erfassen.

5. Anordnung nach einem der vorhergehenden Ansprüche,
**dadurch gekennzeichnet, dass**
die Ortungseinheit (4) mit der Steuereinheit (5) verbundene Sensormittel (11, 12) aufweist, die ausgebildet sind, einen Abstand und/oder eine relative Lage zu die Ortungseinheit (4) umgebenden weiteren Objekten (13, 14, 15) zu erfassen.

6. Anordnung nach einem der vorhergehenden Ansprüche,
**dadurch gekennzeichnet, dass**
die Steuereinheit (5) ausgebildet ist, mittels der durch das Ortsbestimmungsmittel (6) und/oder durch die Sensormittel (11, 12) erfassten Informationen den Abstellort (3, 18, 19, 20) zu klassifizieren.

7. Verfahren zur Ortsbestimmung eines bewegbaren Objekts (2) an einem von mehreren vorherbestimmbaren Abstellorten (3, 18, 19, 20), an denen das bewegbare Objekt (2) abstellbar ist, mittels einer an dem bewegbaren Objekt (2) anbringbaren Ortungseinheit (4), die eine Steuereinheit (5), ein Ortsbestimmungsmittel (6) und ein Funkübertragungsmittel (7) aufweist, wobei mittels des Ortsbestimmungsmittels (6) eine Ortsinformation ermittelt wird, diese Ortsinformation an die Steuereinheit (5) übermittelt wird und die Ortsinformation drahtlos mittels des Funkübertragungsmittels (7) an einen Empfänger (8) übertragen wird, wobei das bewegbare Objekt (2) ein Transportbehälter zur Aufnahme von Gegenständen ist, wobei ein die Ortsinformation speicherndes, den jeweiligen Abstellort (3, 18, 19, 20) eindeutig kennzeichnendes Ortskennzeichen (16) an dem jeweiligen Abstellort (3, 18, 19, 20) angebracht wird und die Ortsinformation mittels des Ortsbestimmungsmittels (6) aus dem Ortskennzeichen (16) des jeweiligen Abstellorts (3, 18, 19, 20), an dem sich das bewegbare Objekt (2) augenblicklich befindet, erfasst wird,
**dadurch gekennzeichnet, dass**
die Ortungseinheit (4) elektrisch von einer Batterie versorgt wird und eine Bewegung der Ortungseinheit (4) mittels mit der Steuereinheit (5) der Ortungseinheit (4) verbundenen Sensormitteln (11, 12) erfasst wird, wobei das Ortsbestimmungsmittel (6) eine Kamera ist und die Ortungseinheit (4) in einen energiesparenden Ruhemodus versetzt wird, in dem wenigstens das Ortsbestimmungsmittel (6) abgeschaltet wird, und die Ortungseinheit (4) aus dem Ruhemodus nur aktiviert wird, um die Ortsinformation mit dem Ortsbestimmungsmittel (6) aus dem am jeweiligen Abstellort (3, 18, 19, 20) angebrachten Ortskennzeichen (16) zu erfassen, wenn eine Bewegung der Ortungseinheit (4) durch die Sensormittel (11, 12) erfasst wird.

## Claims

1. An assembly for the determination of the location of a movable object (2) at one of several predeterminable depositing locations (3, 18, 19, 20) at which the movable object (2) can be deposited, comprising a locating unit (4), which can be attached to the movable object (2) and which includes a control unit (5), a location determination means (6) and a radio transmission means (7), wherein the control unit (5) is configured to receive a location information determined by the location determination means (6) and to transmit the location information wirelessly to a receiver (8) by means of the radio transmission means (7), wherein the movable object (2) is a transport container for accommodating items, wherein the location information is stored in a location identifying label (16), which uniquely identifies the respective depositing location (3, 18, 19, 20) and is affixed at the respective depositing location (3, 18, 19, 20), wherein the location determination means (6) is configured for acquiring the location information from the location identifying label (16) of the respective depositing location (3, 18, 19, 20) at which the movable object (2) is located at present,
**characterized in that**
the locating unit (4) is supplied with electrical power by a battery and the locating unit (4) has sensor means (11, 12), which are connected to the control unit (5) and are configured for acquiring a movement of the locating unit (4), and the location determination means (6) is a camera, wherein the locating unit (4) can be put into an energy-saving sleep mode in which at least the location determination means (6) is turned off, and the locating unit (4) leaves the sleep mode only in order to acquire the location information with the location determination means (6) from the location identifying label (16) affixed at the respective depositing location (3, 18, 19, 20) if a movement of the locating unit (4) is acquired by the sensor means (11, 12).

2. The assembly according to claim 1,
**characterized in that**
the location determination means (6) is configured to acquire the location information from the location identifying label (16) in a contactless manner.

3. The assembly according to any one of the preceding claims,
**characterized in that**
the location identifying label (16) is a barcode or a 2D code.

4. The assembly according to any one of the preceding claims,
**characterized in that**
the locating unit (4) has sensor means (11, 12) connected to the control unit (5), which are configured for acquiring a position of the locating unit (4).

5. The assembly according to any one of the preceding claims,
**characterized in that**
the locating unit (4) has sensor means (11, 12) connected to the control unit (5), which are configured for acquiring a distance from and/or a position relative to further objects (13, 14, 15) surrounding the locating unit (4).

6. The assembly according to any one of the preceding claims,
**characterized in that**
the control unit (5) is configured for classifying the depositing location (3, 18, 19, 20) by means of the information acquired by the location determination means (6) and/or by the sensor means (11, 12).

7. A method for the determination of the location of a movable object (2) at one of several predeterminable depositing locations (3, 18, 19, 20) at which the movable object (2) can be deposited, by means of a locating unit (4), which can be attached to the movable object (2) and which includes a control unit (5), a location determination means (6) and a radio transmission means (7), wherein a location information is determined by means of the location determination means (6), this location information is transmitted to the control unit (5), and the location information is transmitted wirelessly to a receiver (8) by means of the radio transmission means (7), wherein the movable object (2) is a transport container for accommodating items, wherein a location identifying label (16), which stores the location information and uniquely identifies the respective depositing location (3, 18, 19, 20), is affixed at the respective depositing location (3, 18, 19, 20), and the location information is acquired by means of the location determination means (6) from the location identifying label (16) of the respective depositing location (3, 18, 19, 20) at which the movable object (2) is located at present,
**characterized in that**
the locating unit (4) is supplied with electrical power by a battery and a movement of the locating unit (4) is acquired by sensor means (11, 12) connected to the control unit (5) of the locating unit (4), wherein the location determination means (6) is a camera, and the locating unit (4) is put into an energy-saving sleep mode in which at least the location determination means (6) is turned off, and the locating unit (4) is activated from the sleep mode only in order to acquire the location information with the location determination means (6) from the location identifying label (16) affixed at the respective depositing location (3, 18, 19, 20) if a movement of the locating unit (4) is acquired by the sensor means (11, 12).

## Revendications

1. Système de localisation d'un objet pouvant se déplacer (2) à l'un de plusieurs emplacements de stockage (3, 18, 19, 20) pouvant être prédéterminés, auxquels l'objet pouvant se déplacer (2) peut être stocké, comportant une unité de localisation (4) pouvant être fixée à l'objet pouvant se déplacer (2) et comportant une unité de commande (5), un moyen de détermination de localisation (6) et un moyen de transmission radio (7), dans lequel l'unité de commande (5) est conçue pour recevoir une information de localisation déterminée par le moyen de détermination de localisation (6) et pour transmettre sans fil à un récepteur (8) l'information de localisation au moyen du moyen de transmission radio (7), dans lequel l'objet pouvant se déplacer (2) est un conteneur de transport destiné à recevoir des objets, dans lequel l'information de localisation est mémorisée dans un identifiant de localisation (16) identifiant de manière unique l'emplacement de stockage (3, 18, 19, 20) respectif et fixé à l'emplacement de stockage (3, 18, 19, 20) respectif, dans lequel le moyen de détermination de localisation (6) est conçu pour détecter l'information de localisation à partir de l'identifiant de localisation (16) de l'emplacement de stockage (3, 18, 19, 20) respectif auquel l'objet pouvant se déplacer (2) se trouve à l'instant présent,
**caractérisé en ce que**
l'unité de localisation (4) est alimentée électriquement par une batterie et l'unité de localisation (4) comporte des moyens de détection (11, 12) reliés à l'unité de commande (5) et conçus pour détecter un déplacement de l'unité de localisation (4), et le moyen de détermination de localisation (6) est une caméra, dans lequel l'unité de localisation (4) peut être mise dans un mode de veille économisant l'énergie lors duquel au moins le moyen de détermination de localisation (6) est désactivé, et l'unité de localisation (4) ne quitte le mode de veille que pour détecter l'information de localisation à l'aide du moyen de détermination de localisation (6) à partir de l'identifiant de localisation (16) fixé à l'emplacement de stockage (3, 18, 19, 20) respectif lorsqu'un déplacement de l'unité de localisation (4) est détecté par les moyens de détection (11, 12).

2. Système selon la revendication 1,
**caractérisé en ce que**
le moyen de détermination de localisation (6) est conçu pour détecter sans contact l'information de localisation à partir de l'identifiant de localisation (16).

3. Système selon l'une quelconque des revendications précédentes,
**caractérisé en ce que**
l'identifiant de localisation (16) est un code à barres ou un code 2D.

4. Système selon l'une quelconque des revendications précédentes,
**caractérisé en ce que**
l'unité de localisation (4) comporte des moyens de détection (11, 12) reliés à l'unité de commande (5) et conçus pour détecter une position de l'unité de localisation (4).

5. Système selon l'une quelconque des revendications précédentes,
**caractérisé en ce que**
l'unité de localisation (4) comporte des moyens de détection (11, 12) reliés à l'unité de commande (5) et conçus pour détecter une distance et/ou une position relative par rapport à d'autres objets (13, 14, 15) entourant l'unité de localisation (4).

6. Système selon l'une quelconque des revendications précédentes,
**caractérisé en ce que**
l'unité de commande (5) est conçue pour classer l'emplacement de stockage (3, 18, 19, 20) au moyen des informations détectées par le moyen de détermination de localisation (6) et/ou par les moyens de détection (11, 12) .

7. Procédé de localisation d'un objet pouvant se déplacer (2) à l' un de plusieurs emplacements de stockage (3, 18, 19, 20) pouvant être prédéterminés, auxquels l'objet pouvant se déplacer (2) peut être stocké, au moyen d'une unité de localisation (4) pouvant être fixée à l'objet pouvant se déplacer (2) et comportant une unité de commande (5), un moyen de détermination de localisation (6) et un moyen de transmission radio (7), dans lequel une information de localisation est déterminée au moyen du moyen de détermination de localisation (6), ladite information de localisation est transmise à l'unité de commande (5) et l'information de localisation est transmise sans fil à un récepteur (8) au moyen du moyen de transmission radio (7), dans lequel l'objet pouvant être déplacé (2) est un conteneur de transport destiné à recevoir des objets, dans lequel un identifiant de localisation (16) mémorisant l'information de localisation et identifiant sans ambiguïté l'emplacement de stockage (3, 18, 19, 20) respectif est fixé à l'emplacement de stockage (3, 18, 19, 20) respectif et l'information de localisation est détectée au moyen du moyen de détermination de localisation (6) à partir de l'identifiant de localisation (16) de l'emplacement de stockage (3, 18, 19, 20) respectif auquel l'objet pouvant se déplacer (2) se trouve à l'instant présent,
**caractérisé en ce que**
l'unité de localisation (4) est alimentée électriquement par une batterie et un déplacement de l'unité de localisation (4) est détecté au moyen de moyens de détection (11, 12) reliés à l'unité de commande (5) de l'unité de localisation (4), dans lequel le moyen de détermination de localisation (6) est une caméra et l'unité de localisation (4) est mise dans un mode de veille économisant l'énergie lors lequel au moins le moyen de détermination de localisation (6) est désactivé, et l'unité de localisation (4) n'est activée à partir du mode de veille que pour détecter l'information de localisation à l'aide du moyen de détermination de localisation (6) à partir de l'identifiant de localisation (16) fixé à l'emplacement de stockage (3, 18, 19, 20) respectif lorsqu'un déplacement de l'unité de localisation (4) est détecté par les moyens de détection (11, 12).
